(19) Europäisches Patentamt
European Patent Office
Office européen des brevets

(11) EP 1 838 923 B1

(12) **FASCICULE DE BREVET EUROPEEN**

(45) Date de publication et mention de la délivrance du brevet:
**04.01.2012 Bulletin 2012/01**

(21) Numéro de dépôt: **06709400.3**

(22) Date de dépôt: **11.01.2006**

(51) Int Cl.:
***D21H 21/18*** (2006.01) ***D21H 17/45*** (2006.01)
***D21H 17/42*** (2006.01)

(86) Numéro de dépôt international:
**PCT/FR2006/050012**

(87) Numéro de publication internationale:
**WO 2006/075115 (20.07.2006 Gazette 2006/29)**

(54) **PROCEDE DE FABRICATION DE PAPIER ET CARTON DE GRANDE RESISTANCE A SEC ET PAPIERS ET CARTONS AINSI OBTENUS**

VERFAHREN ZUR HERSTELLUNG HOCHTROCKENFESTEN PAPIERS UND KARTONS UND DAMIT HERGESTELLTES PAPIER UND KARTON

METHOD OF PRODUCING HIGH DRY STRENGTH PAPER AND CARDBOARD AND PAPER AND CARDBOARD THUS OBTAINED

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.01.2005 FR 0550135**

(43) Date de publication de la demande:
**03.10.2007 Bulletin 2007/40**

(73) Titulaire: **S.P.C.M. SA**
**42160 Andrezieux Boutheon (FR)**

(72) Inventeurs:
- **HUND, René**
  **F-42390 Villars (FR)**
- **JEHN-RENDU, Christian**
  **F-42680 Saint Marcellin En Forez (FR)**
- **MORETTON, Fabrice**
  **F-69008 Lyon (FR)**

(74) Mandataire: **Denjean, Eric et al**
**Cabinet Laurent & Charras**
**"Le Contemporain"**
**50, Chemin de la Bruyère**
**69574 Dardilly Cedex (FR)**

(56) Documents cités:
**EP-A- 0 377 313** **US-A1- 2004 118 540**

- **DATABASE WPI Section Ch, Week 198320 Derwent Publications Ltd., London, GB; Class A97, AN 1983-47993K XP002346666 & JP 58 060094 A (HAMANO KOGYO KK) 9 avril 1983 (1983-04-09) cité dans la demande**
- **PATENT ABSTRACTS OF JAPAN vol. 2000, no. 18, 5 juin 2001 (2001-06-05) & JP 06 010296 A (HERCULES INC), 18 janvier 1994 (1994-01-18)**
- **PATENT ABSTRACTS OF JAPAN vol. 018, no. 533 (C-1259), 11 octobre 1994 (1994-10-11) & JP 06 184983 A (SUMITOMO CHEM CO LTD), 5 juillet 1994 (1994-07-05)**
- **PATENT ABSTRACTS OF JAPAN vol. 018, no. 668 (C-1289), 16 décembre 1994 (1994-12-16) & JP 06 263925 A (NIPPON ZEON CO LTD), 20 septembre 1994 (1994-09-20)**
- **PATENT ABSTRACTS OF JAPAN vol. 011, no. 259 (C-441), 21 août 1987 (1987-08-21) & JP 62 059602 A (HARIMA CHEM INC), 16 mars 1987 (1987-03-16)**
- **PATENT ABSTRACTS OF JAPAN vol. 008, no. 255 (C-253), 21 novembre 1984 (1984-11-21) & JP 59 135204 A (HAMANO KOGYO KK), 3 août 1984 (1984-08-03)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 838 923 B1

## Description

L'invention concerne un papier présentant une résistance à sec améliorée et une résistance à l'état humide limitée (optimisée) ainsi que son procédé de fabrication caractérisé par l'utilisation conjointe d'au moins deux polymères différents, un portant des charges cationiques et l'autre étant globalement anionique. Ces polymères s'associent pour exercer une action synergique sur la résistance à sec de ce papier.

Plus précisément, l'invention concerne un procédé amélioré de fabrication du papier et/ou du carton et analogues, selon lequel on utilise au moins deux (co)polymères pour améliorer les caractéristiques de résistance à sec lors de la fabrication de feuilles cellulosiques et est caractérisé en ce que :

- au moins un des agents est obtenu par réaction de dégradation d'Hofmann sur un (co)polymère d'acrylamide,
- et au moins un second agent est un (co)polymère ayant une densité de charge anionique et supérieure à 0,1 meq/g.

Selon l'invention, le produit de dégradation d'Hofmann est un polymère organique caractérisé en ce que :

- il est produit en solution, à une concentration supérieure à 3,5% en poids, de préférence supérieure à 4,5%, avantageusement supérieur à 10% à partir d'un (co)polymère d'acrylamide de poids moléculaire supérieur à 5000,
- il présente une anionicité résiduelle inférieure à 10 moles%, de préférence inférieure à 5 moles%,
- il est obtenu par réaction d'un hydroxide d'alcalino-terreux et d'un hypohalogénure d'alcalino-terreux avec un rapport molaire hydroxide/hypohalogénure compris entre 2 et 6, de préférence entre 2 et 5.

Ce système à 2 composantes peut être utilisé avec succès pour la fabrication de papiers et cartons d'emballage, de papiers supports de couchage, de tout type de papiers, cartons ou analogues nécessitant une résistance à sec améliorée.

On recherche des papiers et cartons qui sont de plus en plus résistants, notamment pour l'industrie de l'emballage.

La résistance à sec du papier est par définition la résistance de la feuille normalement sèche. Les valeurs de résistance à l'éclatement et à la traction donnent traditionnellement une mesure de la résistance à sec du papier.

Il est bien connu d'utiliser des polymères cationiques solubles dans l'eau pour améliorer les caractéristiques de résistance du papier. De par leur nature, ils peuvent se fixer directement sur la cellulose anionique et lui conférer une charge cationique de telle sorte qu'en association avec des polymères anioniques, il y ait fixation de ces derniers sur les fibres cellulosiques, améliorant ainsi la résistance à sec de la feuille.

Les polymères cationiques les plus communément utilisés sont des composés de type amidon cationique, polyamide épichlorhydrine (PAE), polyamide amine épichlorhydrine (PAAE) ou des polyacrylamides cationiques éventuellement glyoxalés.

Les procédés décrits dans l'art antérieur utilisant ces polymères ne sont cependant pas entièrement satisfaisants, notamment en ce qui concerne les quantités de polymères requises et/ou les caractéristiques de résistance humide engendrées, entraînant des difficultés de process telles que la trituration en pâte de la feuille en vue d'un recyclage des cassés sec. Ce dernier inconvénient est en particulier observé lorsqu'on met en oeuvre le procédé décrit dans le document US 2004/118540.

La résistance à l'éclatement des feuilles cellulosiques obtenue grâce à l'emploi d'agents de résistance à sec doit par ailleurs satisfaire un certain nombre d'exigences. Elle doit notamment être sans inconvénient sur le plan toxicologique et présenter une bonne compatibilité avec les autres agents intervenant dans la fabrication de la feuille.

Il a déjà été proposé, notamment dans les demandes de brevet JP 58-60094 (Hamano) et JP 04-57992 (Mitsui), d'associer des produits de dégradation d'Hofmann avec un polymère anionique, cette association visant à proposer un système performant pour la résistance à sec de la feuille de papier.

Toutefois, l'instabilité inhérente des polymères obtenus par réaction de dégradation d'Hofmann sur un (co) polymère d'acrylamide, ainsi que leur efficacité modérée lorsque l'on souhaite améliorer les propriétés mécaniques de la feuille, font que l'homme du métier était dissuadé d'utiliser les produits décrits dans ces deux documents japonais.

Le document EP-A-377 313 propose d'associer à un polymère anionique, un produit de dégradation d'Hofmann fabriqué à des concentrations très faibles, en pratique de l'ordre de 1 % (voir Paper making - Exemple 1). En pratique, le produit de dégradation est obtenu à des températures élevées nécessitant de le préparer seulement au moment de la fabrication de la feuille.

De par ces connaissances qui apparaissent rédhibitoires, seuls des procédés très lourds mettant en oeuvre, in situ dans la papeterie, une unité de fabrication de produit de dégradation d'Hofmann ou des procédés utilisant une autre voie de synthèse (base de type (co)polymère de N-vinylformamide suivie d'une hydrolyse) elle-même relativement coûteuse, ont été mis en place.

Or, le Demandeur a constaté que l'utilisation d'un produit de dégradation d'Hofmann de concentration de

production supérieure à 1%, en pratique supérieure à 3,5%, avant dilution éventuelle, permettait de manière surprenante, d'améliorer la résistance à sec.

L'invention vise donc un procédé du type en question, à savoir produit de dégradation d'hofmann associé à un polymère anionique, qui améliore significativement les propriétés de résistance à sec du papier, tout en proposant en association avec un (co)polymère ayant une densité de charge anionique et supérieure à 0,1 meq/g, un produit de dégradation d'Hofmann stable et de concentration élevée (> à 3,5% en poids, de préférence > 4,5%, avantageusement supérieur à 10%), ceci en développant une résistance humide limitée, sans altérer les performances du système de rétention.

Un autre objet et mérite de l'invention est d'avoir élaboré un procédé perfectionné de fabrication de pâte à papier, selon lequel il n'y a aucune contrainte spécifique liée à la préparation, au coût ou à l'efficacité des agents de résistance à sec.

La demanderesse a trouvé et mis au point un procédé amélioré de fabrication d'une feuille de papier et/ou de carton et analogues, selon lequel, avant formation de ladite feuille, on ajoute à la suspension fibreuse, séparément ou en mélange, dans un ordre quelconque d'introduction, en un seul point ou deux points d'injection , au moins deux agents de résistance à sec respectivement :

- un premier agent correspondant à un produit de dégradation d'Hofmann en solution sur un (co)polymère (désigné dans la suite de la description « (co)polymère base ») comprenant au moins un monomère non ionique choisi dans le groupe comprenant l'acrylamide et/ou le méthacrylamide, le N,N diméthylacrylamide et/ou l'acrylonitrile, le produit de dégradation d'Hofmann est un polymère organique produit à une concentration supérieure à 3,5% en poids, de préférence supérieure à 4,5%, avantageusement supérieure à 10% et avantageusement obtenu à partir d'un (co) polymère de poids moléculaire supérieur à 5000,
- et un second agent correspondant à un (co)polymère ayant une densité de charge anionique supérieure à 0,1 meq/g (appelé aussi résine anionique),
- les premier et second agents étant introduits dans la suspension fibreuse à raison de 0,01 à 2% chacun en poids de matière active polymère par rapport au poids sec de la suspension fibreuse.

L'invention se caractérise en ce que le second agent est obtenu à partir de :

- 1 à 100% molaire d'au moins un monomère possédant une charge anionique,
- et 0 à 99% molaire d'au moins un monomère possédant une charge neutre ou cationique,
- et en ce qu'il est ramifié.

Pour plus de clarté, dans la suite de la description, dans les exemples et dans les revendications, le produit de dégradation d'Hofmann est désigné « premier agent » bien qu'il puisse être introduit dans la suspension fibreuse après la résine anionique dénommée « second agent » et vice-versa.

Selon une première caractéristique, le produit de dégradation d'Hofmann présente une anionicité résiduelle inférieure à 10 moles%, de préférence inférieure à 5 moles%.

Selon une autre caractéristique, le produit de dégradation d'Hofmann est obtenu par réaction d'un hydroxide d'alcalino-terreux et d'un hypohalogénure d'alcalino-terreux avec un rapport molaire hydroxide/hypohalogénure compris entre 2 et 6, de préférence entre 2 et 5.

Comme souligné précédemment, l'invention vise un procédé perfectionné qui consiste, au cours de l'élaboration même du papier, à incorporer à la suspension ou masse fibreuse ou pâte à papier, comme agents de résistance à sec, en mélange ou non, dans un ordre quelconque :

- de 0,01 à 2% en poids de matière active polymère par rapport au poids sec de la suspension fibreuse, d'au moins un polymère obtenu par réaction de dégradation d'Hofmann sur le (co)polymère base, le polymère ayant une concentration supérieure à 3,5% en poids,
- et de 0,01 à 2% en poids de matière active polymère par rapport au poids sec de la suspension fibreuse, d'au moins un (co)polymère ayant une densité de charge anionique supérieure à 0,1 meq/g.

De manière tout à fait surprenante, la sélection des conditions de préparation du produit de dégradation d'Hofmann :

- concentration de la base de préférence supérieure à 20% en poids, permettant d'obtenir un produit final de concentration supérieure à 3,5%, de préférence supérieure à 4,5%, avantageusement supérieure à 10%,
- faible température de dégradation comprise entre 0 et 45°C, de préférence 10 et 20°C, résultant en une anionicité résiduelle inférieure à 10 moles%, de préférence inférieure à 5 moles%

- rapport molaire hydroxide/hypohalogénure compris entre 2 et 6, de préférence entre 2 et 5,

permet, lors de l'addition de ce produit dans la pâte en association avec un polymère de type anionique, d'atteindre un niveau de performances inégalé, à dosage similaire, dans l'application papetière pour la résistance à sec.

Le procédé de l'invention permet, en particulier, d'obtenir une résistance à l'éclatement et à la traction très élevée et ceci, sans effet secondaire négatif.

**A/ Le produit de dégradation d'Hofmann**

Il est obtenu par réaction de dégradation d'Hofmann sur un (co)polymère base.

La dégradation d'Hofmann

Cette réaction découverte par Hofmann à la fin du dix neuvième siècle, permet de passer d'un amide à une amine primaire possédant un atome de carbone en moins. Le mécanisme réactionnel est détaillé ci-dessous.

En présence d'une base (soude), un proton est arraché à l'amide.

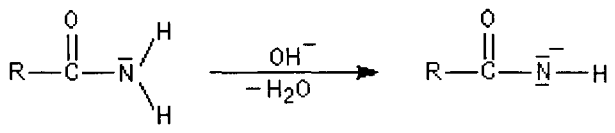


L'ion amidate formé réagit alors avec de l'hypochlorite pour donner un N-chloramide. La base arrache un proton du chloramide pour former un anion.
L'anion perd un ion chlorure pour former un nitrène qui subit une transposition en isocyanate.

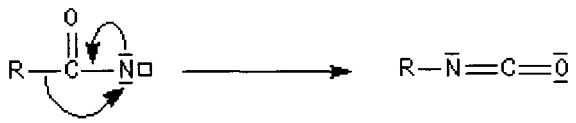

Par réaction entre l'ion hydroxyde et l'isocyanate, un carbamate est formé.

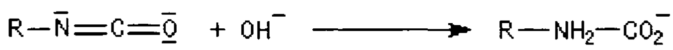

Après décarboxylation (élimination de $CO_2$) à partir du carbamate, on obtient une amine primaire.

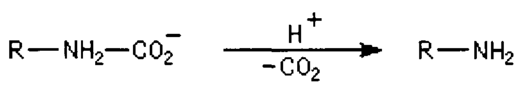


Il est à noter que, de façon systématique, une proportion plus ou moins grande d'amide initial est hydrolysée en acide carboxylique.

Le (co)polymère « base »

En pratique, le polymère base utilisé est constitué :

- d'au moins un monomère non ionique choisi dans le groupe comprenant l'acrylamide (et/ou le méthacrylamide), le N,N diméthylacrylamide et/ou l'acrylonitrile,
- et éventuellement :

  ■ d'au moins un monomère éthylénique cationique non saturé, choisi préférentiellement dans le groupe comprenant les monomères de type dialkylaminoalkyl (meth)acrylamide, diallylamine, methyldiallylamine et leurs

sels d'ammonium quaternaire ou d'acides. On citera en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC),

■ et/ou d'au moins un autre monomère non ionique choisi préférentiellement dans le groupe comprenant le N-vinyl acetamide, N-vinyl formamide, la N-vinylpyrrolidone et/ou le vinyl acétate.

Optionnellement, le polymère base peut également être très faiblement amphotère (taux inférieur à 5 moles%) et comporter par exemple des charges anioniques portées par des monomères de type acide ou anhydride tels que, par exemple, l'acide (méth)acrylique, l'acide acrylamidomethylpropane sulfonique, l'acide itaconique, l'anhydride maléique, l'acide maléique, l'acide méthallyl sulfonique, l'acide vinylsulfonique et leurs sels.

Il est important de noter que, en association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

De manière connue, le polymère base peut également être ramifié. Comme on le sait, un polymère ramifié est un polymère qui présente sur la chaîne principale des branches, des groupements ou des ramifications, disposés globalement dans un plan.

On pourra effectuer la ramification de préférence durant (ou éventuellement après) la polymérisation, en présence d'un agent ramifiant et éventuellement d'un agent de transfert. On trouvera ci dessous une liste non limitative des ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la réticulation.

En pratique, l'agent de ramification est le méthylène bis acrylamide (MBA) introduit à raison de cinq à cinq milles (5 à 5000) parties par million en poids, de préférence 5 à 1000.

On trouvera ci dessous une liste non limitative des agents de transfert : alcool isopropylique, hypophosphite de sodium, mercaptoethanol, etc...

L'homme de métier saura choisir la meilleure combinaison en fonction de ses connaissances propres et de la présente description, ainsi que des exemples qui vont suivre.

Le (co)polymère servant de base à la réaction de dégradation d'Hofmann ne nécessite pas le développement de procédé de polymérisation particulier. Les principales techniques de polymérisation, bien connues par l'homme de métier et pouvant être utilisées sont : la polymérisation par précipitation, la polymérisation en émulsion (aqueuse ou inverse) suivie ou non d'une étape de distillation et/ou de spray drying, et la polymérisation en suspension ou la polymérisation en solution, ces deux techniques étant préférées.

Cette base est caractérisée en ce qu'elle a un poids moléculaire supérieure à 5000 et sans limitation maximum.

<u>La réaction de dégradation d'Hofmann sur le polymère base</u>

La réaction d'Hofmann nécessite la conversion des fonctions amide en fonction amine en faisant intervenir 2 facteurs principaux (exprimés en rapports molaires) :

- Alpha = (hypohalogénure d'alcalino-terreux / (meth)acrylamide)
- Beta = (hydroxide d'alcalino-terreux / hypohalogénure d'alcalino-terreux)

A partir d'une solution de polymère base (polyacrylamide) de concentration de préférence entre 20 et 40%, on détermine la quantité molaire de fonction (meth)acrylamide totale. On choisit alors le niveau de dégradation alpha souhaité (qui correspond au degré de fonction amine voulu), qui permet de déterminer la quantité sèche d'hypohalogénure d'alcalino-terreux et ensuite le coefficient béta, qui permet de déterminer la quantité sèche d'hydroxide d'alcalino-terreux.

On prépare alors une solution d'hypohalogénure d'alcalino-terreux et d'hydroxide d'alcalino-terreux à partir des rapports alpha et béta.

Afin de stabiliser les fonctions amines qui vont être produites, on rajoute, dans le réacteur contenant le polymère base, un (ou éventuellement plusieurs) dérivé d'ammonium quaternaire tel que cela est décrit dans le brevet JP 57077398 et bien connu par l'homme de métier, celui-ci permet en effet d'éviter la réaction entre les fonctions amines et les fonctions amides résiduelles.

On refroidit alors le réacteur à une température comprise entre 0 et 45°C, de préférence 10 et 20°C, tout en

étant sous agitation mécanique. On verse alors la solution d'hypohalogénure d'alcalino-terreux et d'hydroxide d'alcalino-terreux, par étape ou en continu, dans le réacteur tout en absorbant les calories produites par la réaction en réfrigérant.

Une fois la quantité totale de la solution hypohalogénure d'alcalino-terreux / hydroxide d'alcalino-terreux versée, on prépare une solution d'acide dans un nouveau réacteur que l'on place sous agitation. Le contenu du mélange obtenu est alors introduit dans le réacteur contenant l'acide et la décarboxylation a lieu.

Une simple mise à pH (entre 2 et 7) est alors appliquée en fin de réaction.

Une fois terminée, le produit de dégradation d'Hofmann est à une concentration supérieure à 3,5% et généralement supérieure à 4,5%.

En fonction du degré alpha de dégradation, il est possible de générer des variations de cationicité, liée à la quantité de fonctions amines produite sur le squelette carboné du polymère.

Par ailleurs, il est possible d'atteindre une concentration du produit de dégradation d'Hofmann en solution supérieure à 10%, voire à 15% et plus, en utilisant des procédés de concentration tels que l'ultrafiltration, la diafiltration et ce, sans effet négatif sur le produit.

En pratique, la quantité de produit de dégradation d'Hofmann introduite dans la suspension cellulosique est comprise entre 100 et 20000 grammes de polymère actif par tonne de pâte sèche, soit entre 0,01% et 2%.

On a observé que si la quantité est inférieure à 0,01%, on n'obtient aucune amélioration significative des propriétés mécaniques de la feuille. De plus, si cette quantité excède 2%, il n'existe alors plus d'intérêt commercial.

L'injection ou l'introduction de l'agent de résistance à sec selon l'invention est possible en pâte épaisse, comme en pâte diluée, c'est-à-dire dans les cuviers de pâte épaisse après raffineurs jusqu'au circuit des eaux blanches.

**B/ La résine anionique : le (co)polymère ayant une densité de charge anionique supérieure à 0,1 meq/g.**

En pratique, la résine anionique est un polymère organique hydrosoluble ayant une densité de charge anionique supérieure à 0,1 meq/g, caractérisé en ce qu'il est obtenu à partir de :

- 1 à 100% molaire d'au moins un monomère possédant une charge anionique,
- et 0 à 99% molaire d'au moins un monomère possédant une charge neutre et/ou cationique.

On trouvera ci-dessous une liste non limitative des monomères pouvant être utilisés :

a/ les monomères anioniques possédant une fonction carboxylique (ex : acide acrylique, acide methacrylique, et leurs sels...), possédant une fonction acide sulfonique (ex : acide 2-acrylamido-2-méthylpropane sulfonique (AMPS), acide vinyl sulfonique, acide méthallyl sulfonique et leurs sels...)

b/ les monomères non ioniques : acrylamide, methacrylamide, N,N diméthylacrylamide, N-vinyl pyrrolidone, N-vinyl acétamide, N-vinyl formamide, vinylacetate, esters acrylate, alcool allylique...et/ou les monomères cationiques : on citera, en particulier et de façon non limitative, l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC).

En association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

La résine anionique ne nécessite pas le développement de procédé de polymérisation particulier. Elle peut être obtenue par toutes les techniques de polymérisation bien connues de l'homme de métier : polymérisation en gel, polymérisation par précipitation, polymérisation en émulsion (aqueuse ou inverse) suivie ou non d'une étape de distillation et/ou de spray drying, polymérisation en suspension, polymérisation en solution...

Selon un mode de réalisation particulier et préféré, le (co)polymère ayant une densité de charge anionique supérieure à 0,1 meq/g est ramifié. Il est obtenu par l'ajout, avant, pendant et/ou après la polymérisation, d'un agent ramifiant en présence ou non d'un agent de transfert. Lorsque l'agent ramifiant est du glyoxal, il est ajouté après la polymérisation.

On trouvera ci dessous une liste non limitative des agents ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la ramification.

On trouvera ci dessous une liste non limitative des agents de transfert : alcool isopropylique, hypophosphite de sodium, mercaptoethanol, etc...

En pratique, le second agent de résistance à sec est introduit, de manière tout à fait préférée, dans la suspension à raison de 100 g/t à 20000 g/t en poids de matière active (polymère) par rapport au poids sec de la suspension fibreuse, de préférence de 500 g/t à 5000 g/t.

Pour des raisons de commercialisation, on recherchera à proposer les agents de résistance à sec de l'invention sous leur forme la plus concentrée possible, en utilisant les techniques de concentration adaptées bien connues de l'homme de métier. On notera, de plus, que l'ajout de ces agents peut être effectué en séparé, en simultané, en mélange ou non, dans un ordre quelconque d'introduction et en un ou plusieurs points d'injection.

Les exemples suivants illustrent l'invention sans toutefois en limiter la portée.

## EXEMPLES

### <u>Présentation des agents de résistance à sec</u>

#### a/ Le produit de dégradation d'Hofmann

Le produit a été obtenu par dégradation d'Hofmann d'un homopolymère d'acrylamide ou d'un copolymère d'acrylamide et de chlorure de dimethyldiallyl ammonium (Dadmac) à la température de 10°C à l'aide d'hypochlorite de sodium, d'hydroxyde de sodium et d'acide chlorhydrique (utilisés comme réactifs selon le procédé précédemment décrit). Les polymères bases ont été polymérisés en solution aqueuse à 25% de concentration.

Dans les exemples qui suivent, on utilise les polymères suivants :

| Le produit de dégradation d'Hofmann | Composition | Viscosité de la solution de la base (cps) | Poids moléculaire g/mol | Charge Cationique (meq/g) | Concentration (en poids %) |
|---|---|---|---|---|---|
| C1 | AM | 50 | 4000 | 4,8 | 9,7 |
| C2 | AM | 270 | 25 000 | 4,8 | 9,7 |
| C3 | AM | 1325 | 50 000 | 4,8 | 9,7 |
| C4 | AM | 8500 | 200 000 | 4,8 | 9,7 |
| C5 | AM | 50 | 4000 | 9,6 | 4,8 |
| C6 | AM | 270 | 25 000 | 9,6 | 4,8 |
| C7 | AM | 1325 | 50 000 | 9,6 | 4,8 |
| C8 béta 2 | AM | 8500 | 200 000 | 9,6 | 4,8 |
| C9 | AM/Dadmac | 2500 | 80 000 | 8,0 | 6,3 |
| AM = homopolymère d'acrylamide<br>AM/Dadmac = copolymère acrylamide / Dadmac (95/5 mol%)<br>C1-C4 : alpha = 0,5 / beta = 2<br>C5-C8 : alpha = 1 / beta = 2<br>C9 : alpha = 0,95 / beta = 2 | | | | | |

On notera qu'il existe une corrélation directe entre la viscosité de la solution de la base et le poids moléculaire du polymère (une viscosité de 50 cps à 25% (C1) de concentration correspond à un poids moléculaire de l'ordre de 4000 g/mol). Plus la viscosité de la solution est élevée et plus le poids moléculaire est élevé.

#### b/ La résine anionique : le (co)polymère ayant une densité de charge anionique supérieure à 0,1 meq/g

Les résines anioniques testées sont des copolymères d'acrylamide et d'acide acrylique obtenues par polymérisation en solution à 15%. Certains polymères présentent une structure linéaire et d'autres ramifiée. De plus, nous avons également réalisé :

- un terpolymère en remplaçant une partie de l'acide acrylique par du sodium méthallyl sulfonate (SMS) ceci afin

d'obtenir un produit de même densité de charge mais à 40% de concentration et avec une viscosité bulk seulement de 1000 cps,

- et un polymère linéaire amphotère de charge globale anionique.

Dans les exemples qui suivent, on utilise les polymères suivants :

| résine anionique | Composition | Rapport molaire | Anionicité (meq/g) | Structure | Viscosité de la solution de polymère (cps) |
|---|---|---|---|---|---|
| A1 | AM/AA | 70/30 | 3,85 | Linéaire | 2500 |
| A2 | AM/AA | 70/30 | 3,85 | Ramifié (MBA) | 2500 |
| A3 | AM/AA/SMS | 66/19/15 | 3,85 | Ramifié (MBA) | 1000 |
| A4 | AM/AA/ ADAME MeCl | 83/10/7 | 0,48 | Linéaire | 9000 |
| A5 | AM/AA | 55/28/17 (glyoxal) | 3,75 | Ramifié (glyoxal) | 2500 |
| AA = Acide acrylique<br>ADAME MeCl = Acrylate de dimethylaminoethyl chlorométhylé | | | | | |

**Procédure de test des propriétés de résistance à sec**

Les formettes de papier sont réalisées avec une formette dynamique automatique. Tout d'abord, la pâte à papier est préparée en désintégrant pendant 30 minutes 90 grammes de fibres kraft vierges dans 2 litres d'eau chaude. La pâte obtenue est ensuite diluée jusqu'à un volume total de 9 litres. Une fois la consistance mesurée précisément, la quantité nécessaire de cette pâte est prélevée de manière à obtenir au final une feuille avec un grammage de 60g/$m^2$.

La pâte est alors introduite dans le cuvier de la formette dynamique, diluée jusqu'à une consistance de 0,32% et agitée modérément avec un agitateur mécanique afin d'homogénéiser la suspension fibreuse.

En mode manuel, la pâte est pompée jusqu'au niveau de la buse afin d'amorcer le circuit.

Un buvard et la toile de formation sont placés dans le bol de la formette dynamique avant de démarrer la rotation du bol à 900m/min et de construire le mur d'eau. Les différents agents de résistance à sec sont alors introduits dans la suspension fibreuse agitée avec un temps de contact de 30 secondes pour chaque polymère. La feuille est alors réalisée (en mode automatique) par 22 aller-retour de la buse projetant la pâte dans le mur d'eau. Une fois que l'eau est drainée et que la séquence automatique est terminée, la toile de formation avec le réseau de fibres formé est retirée du bol de la formette dynamique et placée sur une table. Un buvard sec est déposé du côté du matelas de fibres humides et est pressé une fois avec un rouleau. L'ensemble est retourné et la toile est délicatement séparée du matelas fibreux. Un second buvard sec est déposé et la feuille (entre les deux buvards) est pressée une fois sous une presse délivrant 4 bars puis est séchée sur un sécheur tendu pendant 9 min à 107°C. Les deux buvards sont ensuite retirés et la feuille est stockée pendant une nuit dans une pièce à humidité et température contrôlées (50% d'humidité relative et 23 °C). Les propriétés de résistance à sec et humide de toutes les feuilles obtenues par cette procédure sont alors évaluées.

L'éclatement est mesuré avec un éclatomètre Messmer Buchel M 405 (moyenne sur 14 mesures).

La traction à sec et/ou l'énergie de traction absorbée (TEA) sont mesurées dans le sens machine avec un appareil de traction Testometric AX (moyenne sur 5 échantillons).

La traction humide est mesurée dans le sens machine avec un appareil de traction Testometric AX après que l'échantillon ait été trempé pendant 20 secondes dans une cellule de Finch remplie d'eau déionisée (moyenne sur 5 échantillons).

Dans tous les exemples qui suivent, et sauf indication contraire, les feuilles de papier sont réalisées selon la procédure ci-dessus en introduisant en premier l'agent de résistance à sec cationique (le produit de dégradation d'Hofmann) à un dosage de 2 kg/T (polymère sec / fibre sèche) puis la résine anionique à un dosage de 3 kg/T (polymère sec / fibre sèche).

Les tests sont réalisés avec une pâte à pH neutre.

**Tab.1 : Effet de la nature du produit de dégradation d'Hofmann**

Le contre exemple (CE1) est une polyvinylamine (cationicité 9,6 meq/g) de type Catiofast™ PR 8106 obtenue

par hydrolyse basique d'un homopolymère de vinylformamide (solution aqueuse à 25% de concentration).

| Numéro de feuille | produit de dégradation d'Hofmann | Résine anionique | Indice d'éclatement | TEA à sec ($J/m^2$) | Traction humide (m) |
|---|---|---|---|---|---|
| *Témoin* | - | - | *1,788* | *36,50* | *50* |
| 1 | C8 béta 2 | A2 | 2,506 | 76,25 | 278 |
| 2 | C9 | A2 | 2,435 | 74,62 | 241 |
| 3 | CE1 | A2 | 2,498 | 75,03 | 418 |
| 4 | C8 béta 2 | - | 2,101 | 59,84 | 243 |

Comparativement à l'exemple 4, l'exemple 2 démontre l'effet synergique résultant de l'association des 2 agents de résistance à sec.

De plus, à la vue des résultats, il apparaît clairement et de façon surprenante que l'utilisation comme premier agent de résistance à sec d'une polyvinylamine de même cationicité mais issue d'une voie de préparation différente (hydrolyse basique d'un homopolymère de vinylformamide) à un effet négatif très important sur la résistance humide, ceci contrairement au produit de dégradation d'Hofmann de l'invention.

D'autre part l'utilisation comme base d'un copolymère acrylamide/Dadmac au lieu d'un homopolymère d'acrylamide apporte après dégradation d'Hofmann un niveau de résistance à sec satisfaisant tout en ayant également un effet limité sur la traction humide.

**Tab.2 : Effet du poids moléculaire du (co)polymère base (avant dégradation d'Hofmann)**

| Numéro de feuille | produit de dégradation d'Hofmann | Résine anionique | Traction à sec (km) | Indice d'éclatement |
|---|---|---|---|---|
| *Témoin* | | - | *4,045* | *1,998* |
| 5 | C1 | A2 | 3,495 | 1,716 |
| 6 | C2 | A2 | 4,146 | 2,100 |
| 7 | C3 | A2 | 4,343 | 2,297 |
| 8 | C4 | A2 | 4,453 | 2,331 |
| 9 | C5 | A2 | 3,790 | 1,750 |
| 10 | C6 | A2 | 4,547 | 2,443 |
| 11 | C7 | A2 | 4,613 | 2,501 |
| 1 | C8 béta 2 | A2 | 4,816 | 2,506 |

Ces résultats montrent clairement que, à charge cationique constante, les propriétés de résistance à sec augmentent lorsque le poids moléculaire de la base de polyacrylamide augmente (feuilles 5-8, 9-11 & 1).

On constate de plus que, une augmentation de la cationicité peut permettre de contrebalancer l'effet négatif d'un poids moléculaire faible mais cela jusqu'à une limite basse celui-ci (C1, PM = 4000) ou cet effet n'a plus d'efficacité.

**Tab.3 : Effet de la valeur du coéfficient béta (6) sur les agents de rétention**

Afin d'évaluer l'effet du facteur béta (rapport molaire : hydroxide d'alcalino-terreux / hypohalogénure d'alcalino-terreux) des essais ont été réalisés en faisant varier ce facteur de 2 à 7 (C8 béta 2 à C8 béta 7), tout en conservant le rapport alpha à 1.

| Béta | Cationicité meq/g | Concentration% |
|---|---|---|
| 2 | 9,6 | 4,8 |

(suite)

| Béta | Cationicité meq/g | Concentration% |
|---|---|---|
| 4 | 10,2 | 3,9 |
| 5 | 11,2 | 3,5 |
| 7 | 11,7 | 2,9 |

Le tableau ci dessus montre qu'il est possible d'augmenter le rendement de la conversion des fonctions amide en fonctions amine en augmentant le rapport Béta. Plus β est élevé et plus la densité de charge cationique atteinte pour la polyvinylamine est élevée.

Afin de déterminer l'effet coefficient β dans le procédé global de fabrication de la feuille de papier, nous avons mené une étude avec un agent de rétention standard de haut poids moléculaire de type co-polymère acrylamide-adame chloro-methylé référencé FO 4190 PG 2.

Une pâte à papier composée d'un mélange 70% Kraft blanchie de feuillus, 20% de pâte mécanique écrue et 10% Kraft blanchie de résineux, raffinée à un degré Canadian Standard Freeness de 400 ml. On rajoute 20% de carbonate de calcium à la suspension fibreuse à 1,5% puis on dilue l'ensemble à une concentration de 0,5% pour le test, puis l'on prépare autant de bécher à 500 g (soit 2,5 g sec) pour l'étude.

L'appareil de test de la rétention est un Britt-Jar dynamique, bien connu de l'homme de métier et qui permet de simuler les effets du cisaillement et du temps de contact du polymère de rétention en contact avec la pâte à papier. Le principe du test est de rajouter dans le milieu sous agitation, les différents additifs qui interviennent dans la fabrication du papier suivant une séquence pré-établi. Dans le cas de l'exemple, un temps de contact de 1 minute est prévu entre les produits de l'invention et la pâte puis de 20 secondes entre le FO 4190 PG 2 avant de récupérer 100 ml des eaux dites blanches qui s'écoulent sous le tamis de l'appareillage.

Ces eaux sont ensuite filtrées, la quantité recueillie est pesée puis incinérée afin de déterminer la FPR et FPAR. Les facteurs analysés sont la rétention première passe (FPR%) et la rétention en charge minérale (FPAR%).

$$\text{FPR (\%)} = (2{,}5 - (\text{Masse sèche de matière pour 100 ml}) * 5) / 2{,}5$$

$$\text{FPAR (\%)} = (0{,}416 - (\text{Masse de cendres pour 100 ml}) * 5) / 0{,}416$$

Le dosage de l'agent de rétention FO 4190 PG 2 est de 0,03% par rapport au papier sec soit 300 g/Tonne de papier produit.

Le dosage des produits de dégradation d'Hofmann est de 0,5% par rapport au papier sec soit 5000 g/Tonne de papier produit et de 1% par rapport au papier sec soit 10000 g/Tonne de papier produit en agent secondaire anionique.

| Numéro de feuille | produit de dégradation d'Hofmann | Résine anionique | FO 4190 PG 2 | FPR (%) | FPAR (%) |
|---|---|---|---|---|---|
| *Témoin* | - | - | *0,03%* | *78* | *42* |
| 12 | C8 béta 2 | A2 | 0,03% | 80 | 60 |
| 13 | C8 béta 4 | A2 | 0,03% | 80.5 | 62 |
| 14 | C8 béta 5 | A2 | 0,03% | 79.2 | 54 |
| 15 | C8 béta 7 | A2 | 0,03% | 77 | 35 |

On peut constater que, malgré une cationicité plus forte, une augmentation du coefficient béta entraîne une désactivation du polymère de rétention et ainsi une chute en rétention de charges.

**<u>Tab 4 : Effet du coefficient B sur les propriétés physiques du papier</u>**

Sur une même base d'un homopolymère d'acrylamide, des réactions de dégradation d'Hoffman sont réalisées avec 2 valeurs différentes de β (β=2 et β=7).

| Numéro de feuille | produit de dégradation d'Hofmann | Résine anionique | Traction à sec (km) | Indice d'éclatement | Traction humide (m) |
|---|---|---|---|---|---|
| *Témoin* | | - | *4,279* | *1,998* | *51* |
| 1 | C8 béta 2 | A2 | 4,816 | 2,506 | 278 |
| 16 | C8 béta 7 | A2 | 5,031 | 2,508 | 350 |

On constate que les propriétés de résistance à sec et mais aussi humide augmentent lorsque la valeur de β augmente.

**Tab.5 : Effet du type de Polymère anionique utilisés comme résine anionique.**

| Numéro de feuille | produit de dégradation d'Hofmann | Résine anionique | Indice d'éclatement | TEA à sec ($J/m^2$) | Traction humide (m) |
|---|---|---|---|---|---|
| *Témoin* | | | *1,788* | *36,50* | *50* |
| 17 | C8 béta 2 | A1 | 2,402 | 65,10 | 271 |
| 1 | C8 béta 2 | A2 | 2,506 | 76,25 | 278 |
| 18 | C8 béta 2 | A3 | 2,424 | 68,20 | 273 |
| 19 | C8 béta 2 | A4 | 2,445 | 70,61 | 273 |

Il apparaît clairement que la résistance à sec est augmentée en utilisant comme résine anionique un polymère ramifié (A3 et surtout A2) plutôt que linéaire (A1). Il faut également noter qu'un polymère amphotère (A4) permet d'atteindre le même niveau de performance qu'un polymère purement anionique. D'autre part, on constate que le type de polymère anionique n'a pas d'effet sur la résistance humide.

**Tab 6 : Effet de la concentration lors de la dégradation**

Dans les essais suivants, nous avons voulu comparer, à valeurs de coefficients alpha et béta identiques, l'effet de la concentration en polymère lors de la réaction de dégradation d'Hofmann, également indirectement exprimée par la concentration finale du 1$^{er}$ agent de résistance à sec.

Les produits de dégradation d'Hofmann C8 alpha 1 béta 2 et C8 alpha 1 béta 5 suivant la présente invention produits aux concentrations respectives en matière active de 4,9 et à partir d'un polymère base à 25% de concentration et comparé à deux polymères présentant une concentration finale de fabrication en matière active de 2 et 3% :

- CE2 : homopolymère d'acrylamide identique à celui utilisé pour C8 mais dilué à la concentration de 3% avant réaction de dégradation d'Hofmann (concentration finale de fabrication à 2%),
- CE3 : homopolymère d'acrylamide identique à celui utilisé pour C8 mais dilué à la concentration de 8% avant réaction de dégradation d'Hofmann (concentration finale de fabrication à 3%).

| Numéro de feuille | produit de dégradation d'Hofmann | Conc. du produit de dégradation d'Hofmann | Résine anionique | Indice d'éclatement | TEA à sec ($J/m^2$) | Traction humide (m) |
|---|---|---|---|---|---|---|
| *Témoin* | | | | *1,788* | *36,50* | *50* |
| 1 | C8 béta 2 | 4,8 | A2 | 2,506 | 76,25 | 278 |
| 20 | C8 béta 5 | 3,5 | A2 | 2,509 | 76,15 | 288 |
| 21 | CE2 | 2 | A2 | 2,273 | 68,7 | 274 |
| 22 | CE3 | 3 | A2 | 2,251 | 68,81 | 286 |

(suite)

| Numéro de feuille | produit de dégradation d'Hofmann | Conc. du produit de dégradation d'Hofmann | Résine anionique | Indice d'éclatement | TEA à sec (J/m$^2$) | Traction humide (m) |
|---|---|---|---|---|---|---|
| 23 | C8 béta 2 | 12 | A2 | 2,507 | 76,17 | 279 |

On peut noter que la réaction de dégradation d'Hofmann, lorsqu'elle est effectuée sur un polymère à plus forte concentration (se traduisant par une concentration finale en matière active élevée, supérieure ou égale à 3,5%) permet d'obtenir des performances significativement supérieures à celles décrites sur un polymère à plus faible concentration inférieure ou égale à 3%.

La feuille 23 est obtenue à l'aide d'un produit de dégradation d'Hofmann C8 béta 2 concentré par un procédé d'ultrafiltration.

On constate, de plus, que lorsque l'on concentre le produit de dégradation d'Hofmann par un procédé d'ultrafiltration, il n'y a aucun impact négatif sur l'activité du polymère.

**Tab 7 : Essais complémentaires**

| Numéro de feuille | produit de dégradation d'Hofmann | Résine anionique | Indice d'éclatement | TEA à sec (J/m$^2$) |
|---|---|---|---|---|
| *Témoin* | - | - | *1,788* | *36,50* |
| 1 | C8 béta 2 | A2 | 2,506 | 76,25 |
| 24 | C8 béta 2 / A2 utilisés en mélange | | 2,315 | 65,2 |
| 25 | A2 | C8 béta 2 | 2,205 | 59,81 |
| 26 | C8 béta 2 | A5 | 2,218 | 63,43 |
| * Pour la feuille 25, à l'inverse des exemples 1 et 26, la résine anionique est introduite en premier, avant le produit de dégradation d'Hofmann.<br>A la vue des résultats ci-dessus, il apparaît que l'ordre d'introduction (24 et 25/1) n'a qu'un impact modéré sur les mesures de résistance à sec. Les meilleurs résultats sont toutefois obtenus lorsque l'ajout s'effectue dans l'ordre d'utilisé pour la préparation de la feuille 1. | | | | |

On constate, de plus, que la résine anionique glyoxalée donne des résultats inférieurs aux résines anioniques ramifiées en cours de polymérisation.

## Revendications

**1.** Procédé de fabrication d'une feuille de papier et/ou de carton et analogues, selon lequel, avant formation de ladite feuille, on ajoute à la suspension fibreuse, séparément ou en mélange, dans un ordre quelconque d'introduction, en un ou plusieurs points d'injection, au moins deux agents de résistance à sec respectivement :

- un premier agent correspondant, à un produit de dégradation d'Hofmann en solution sur un (co)polymère (désigné dans la suite de la description « (co)polymère base ») comprenant au moins un monomère non ionique choisi dans le groupe comprenant l'acrylamide et/ou le méthacrylamide, le N,N diméthylacrylamide et/ou l'acrylonitrile, le produit de dégradation d'Hofmann étant produit à une concentration supérieure à 3,5% en poids, de préférence supérieure à 4,5%,
- et un second agent correspondant à un (co)polymère ayant une densité de charge anionique supérieure à 0,1 meq/g,
- les premier et second agents étant introduits dans la suspension fibreuse à raison de 0,01 à 2% chacun en poids de matière active polymère par rapport au poids sec de la suspension fibreuse,

<u>**caractérisé**</u> **en ce que** le second agent est obtenu à partir de :

- 1 à 100% molaire d'au moins un monomère possédant une charge anionique,
- et 0 à 99% molaire d'au moins un monomère possédant une charge neutre ou cationique,

et **en ce qu'**il est ramifié.

2. Procédé selon la revendication 1, **caractérisé en ce que** le produit de dégradation d'Hofmann présente une anionicité inférieure à 10 moles%, de préférence inférieure à 5 moles%.

3. Procédé selon l'une des revendications précédentes, **caractérisé en ce que** le polymère sur lequel est effectué la réaction d'Hofmann a un poids moléculaire supérieur à 5 000.

4. Procédé selon l'une des revendications précédentes, **caractérisé en ce que** le produit de dégradation d'Hofmann est obtenu par réaction d'un hydroxide d'alcalino- terreux et d'un hypohalogénure d'alcalino-terreux avec un rapport molaire hydroxide/hypohalogénure compris entre 2 et 6, de préférence entre 2 et 5.

5. Procédé selon l'une des revendications précédentes, **caractérisé en ce que** le premier agent correspond à un produit de dégradation d'Hofmann sur un (co)polymère base constitué :

   - d'au moins un monomère non ionique choisi dans le groupe comprenant l'acrylamide et/ou le méthacrylamide, le N,N diméthylacrylamide et/ou l'acrylonitrile, et
   - au moins un monomère éthylénique cationique non saturé, choisi dans le groupe comprenant les monomères de type dialkylaminoalkyl (meth)acrylamide, diallylamine, methyldiallylamine et leurs sels d'ammonium quaternaire ou d'acides, et/ou au moins un monomère non ionique choisi dans le groupe comprenant le N-vinyl acetamide, N-vinyl formamide, la N-vinylpyrrolidone et/ou le vinyl acétate.

6. Procédé selon l'une des revendications précédentes, **caractérisé en ce que** lorsque le polymère sur lequel est effectué la réaction d'Hofmann est un copolymère, le copolymère contient des monomères comportant des charges anioniques à un taux inférieur à 5 moles%.

7. Procédé selon la revendication 1, **caractérisé en ce que** les monomères possèdent une charge anionique sont des monomères anioniques possédant une fonction carboxylique choisis dans le groupe comprenant acide acrylique, acide methacrylique, et leurs sels... et/ou, possédant une fonction acide sulfonique choisis dans le groupe comprenant l'acide 2-acrylamido-2-méthylpropane sulfonique (AMPS), acide vinyl sulfonique, acide méthallyl sulfonique et leurs sels... et/ou des monomères non ioniques choisis dans le groupe comprenant: acrylamide, methacrylamide, N,N diméthylacrylamide N-vinyl pyrrolidone, N-vinyl acétamide, N-vinyl formamide, vinylacetate, esters acrylate, alcool allylique... et/ou des monomères cationiques choisis dans le groupe comprenant l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC).

8. Procédé selon l'une des revendications précédentes **caractérisé en ce que** le second agent est ramifié en cours de polymérisation.

9. Procédé selon l'une des revendications précédentes, **caractérisé en ce que** le produit de dégradation d'Hofmann est introduit avant le (co)polymère ayant une densité de charge anionique supérieure à 0,1 meq/g.

10. Procédé selon l'une des revendications précédentes, **caractérisé en ce que** le produit de dégradation d'Hofmann est obtenu par réaction de dégradation d'Hofmann sur un (co)polymère base de concentration supérieure à 20% en poids.

## Claims

1. Production method for a sheet of paper and/or cardboard and the like, according to which, before forming said sheet, are added to the fibrous suspension, separately or in a mixture, in any order of addition, in one or more points of injection, at least two dry strength agents, respectively:

   - a first agent corresponding to a Hofmann degradation product in a solution on a (co)polymer (designated

hereinafter as the "base (co)polymer") containing at least one non-ionic monomer selected from the group including the acrylamide and/or methacrylamide, N,N dimethylacrylamide and/or acrylonitrile, the Hofmann degradation product being produced at a concentration greater than 3.5% by weight, preferably greater than 4.5%,
- and a second agent corresponding to a (co)polymer with an anionic charge density greater than 0.1 meq/g,
- first and second agents being added to the fibrous suspension at 0.01 to 2% each by weight of active polymer material in relation to the dry weight of the fibrous suspension

**characterised in that** the second agent is obtained from:

- 1 to 100 moles percent of at least one monomer with an anionic charge,
- and 0 to 99 moles percent of at least one monomer with a neutral or cationic charge,

and **in that** it is branched.

2. Method as claimed in claim 1, **characterised in that** the Hofmann degradation product has anionicity less than 10 moles percent, preferably less than 5 moles percent.

3. Method as claimed in any of the previous claims, **characterised in that** the polymer on which the Hofmann reaction is performed has a molecular weight greater than 5,000.

4. Method as claimed in any of the previous claims, **characterised in that** the Hofmann degradation product is obtained by reaction of an alkaline earth hydroxide and an alkaline earth hypohalide with a hydroxide/hypohalide mole ratio between 2 and 6, preferably between 2 and 5.

5. Method as claimed in any of the previous claims, **characterised in that** the first agent corresponds to a Hofmann degradation product on a base (co)polymer containing:

- at least one non-ionic monomer selected from the group including acrylamide and/or methacrylamide, N,N dimethylacrylamide and/or acrylonitrile, and
- at least one unsaturated cationic ethylene monomer, preferably selected from the group including monomers such as dialkylaminoalkyl (meth)acrylamide, diallylamine, methyl diallylamine and their quaternary ammonium or acid salts, and/or at least one non-ionic monomer selected from the group including N-vinyl acetamide, N-vinyl formamide, N-vinyl pyrrolidone and/or vinyl acetate.

6. Method as claimed in any of the previous claims, **characterised in that**, when the polymer on which the Hofmann reaction is performed is a copolymer, the copolymer contains monomers with anionic charges at a level less than 5 moles percent.

7. Method as claimed in claim 1, **characterised in that** the monomers are anionic monomers with a carboxylic function selected from the group including acrylic acid, methacrylic acid and their salts... and/or having a sulfonic acid function selected from the group including 2-acrylamido-2-methylpropane sulfonic acid (AMPS), vinyl sulfonic acid, methallyl sulfonic acid and their salts... and/or non-ionic monomers selected from the group including acrylamide, methacrylamide, N,N dimethylacrylamide, N-vinyl pyrrolidone, N-vinyl acetamide, N-vinyl formamide, vinyl acetate, acrylate esters, allyl alcohol.... and/or cationic monomers selected from the group including dimethylaminoethyl acrylate (DMAEA) and/or dimethylaminoethyle methacrylate (DMAEMA), quaternised or salified, diallyldimethyl ammonium chloride (DADMAC), acrylamidopropyltrimethylammonium chloride (APTAC) and/or methacrylamidopropyltrimethylammonium chloride (MAPTAC).

8. Method as claimed in any of the previous claims, **characterised in that** the second agent is branched during polymerisation.

9. Method as claimed in any of the previous claims, **characterised in that** the Hofmann degradation product is added before the (co)polymer having an anionic charge density greater than 0.1 meq/g.

10. Method as claimed in any of the previous claims, **characterised in that** the Hofmann degradation product is obtained by Hofmann degradation reaction on a base (co)polymer at a concentration greater than 20% by weight.

**Patentansprüche**

1. Verfahren zur Herstellung eines Blatts aus Papier und/oder aus Karton und dergleichen, bei dem vor Bildung des Blatts an einem oder an mehreren Beaufschlagungspunkten mindestens zwei Trockenfestmittel getrennt oder als Gemisch der faserigen Suspension in einer beliebigen Beaufschlagungsreihenfolge zugesetzt werden, und zwar:

   - ein erstes Mittel, das einem Produkt aus dem Hofmann-Abbau in Lösung an einem Polymer bzw. Copolymer (nachfolgend "Basenpolymer" bzw. "Basencopolymer") mit mindestens einem nicht-ionischen Monomer entspricht, das aus der Gruppe gewählt ist, die Acrylamid und/oder Methacrylamid, N,N-Dimethylacrylamid und/oder Acrylonitril umfasst, wobei das Hofmann-Abbauprodukt bei einer Konzentration von über 3,5 Gewichtsprozent, vorzugweise von über 4,5 % entsteht, bzw.
   - ein zweites Mittel, das einem Polymer bzw. Copolymer mit einer anionischen Ladungsdichte von über 0,1 meq/g entspricht,
   - wobei das erste und das zweite Mittel jeweils in Höhe von 0,01 bis 2 % des Gewichts an aktivem Polymermaterial in Bezug auf das Trockengewicht der faserigen Suspension zugesetzt werden,

   **dadurch gekennzeichnet, dass** das zweite Mittel sich aus

   - 1 bis 100 Molprozent mindestens eines Monomers mit einer anionischen Ladung und
   - 0 bis 99 Molprozent mindestens eines Monomers mit einer neutralen oder kationischen Ladung

   ergibt und dass es verzweigt ist.

2. Verfahren nach Anspruch 1, **dadurch gekennzeichnet, dass** das Hofmann-Abbauprodukt eine Anionizität von weniger als 10 Molprozent, vorzugsweise von weniger als 5 Molprozent aufweist.

3. Verfahren nach einem der vorhergehenden Ansprüche, **dadurch gekennzeichnet, dass** das Polymer, an dem die Hofmann-Reaktion erfolgt, ein Molekulargewicht von über 5.000 aufweist.

4. Verfahren nach einem der vorhergehenden Ansprüche, **dadurch gekennzeichnet, dass** das Hofmann-Abbauprodukt sich aus der Reaktion eines Erdalkalihydroxids mit einem Erdalkalihypohalogenid bei einem Molverhältnis Hydroxid/Hypohalogenid zwischen 2 und 6, vorzugsweise zwischen 2 und 5 ergibt.

5. Verfahren nach einem der vorhergehenden Ansprüche, **dadurch gekennzeichnet, dass** das erste Mittel einem Produkt aus dem Hofmann-Abbau an einem Basenpolymer bzw. Basencopolymer entspricht, welches aus

   - mindestens einem nicht-ionischen Monomer aus der Gruppe, die Acrylamid und/oder Methacrylamid, N,N-Dimethylacrylamid und/oder Acrylonitril umfasst, und
   - mindestens einem ethylenischen kationischen nicht gesättigten Monomer aus der Gruppe, welche die Monomere des Typs Dialkylaminoalkyl(meth)acrylamid, Diallylamin, Methyldiallylamin und deren quaternäre oder Säuresalze umfasst, und/oder mindestens einem nicht-ionischen Monomer aus der Gruppe, die N-Vinylacetamid, N-Vinylformamid, N-Vinylpyrrolidon und/oder Vinylacetat umfasst, besteht.

6. Verfahren nach einem der vorhergehenden Ansprüche, **dadurch gekennzeichnet, dass**, wenn das Polymer, an dem die Hofmann-Reaktion stattfindet, ein Copolymer ist, das Copolymer Monomere enthält, welche anionische Ladungen in Höhe von weniger als 5 Molprozent enthalten.

7. Verfahren nach Anspruch 1, **dadurch gekennzeichnet, dass** die Monomere mit einer anionischen Ladung anionische Monomere mit einer Carboxylfunktion sind, die aus der Gruppe gewählt sind, die Acrylsäure, Methacrylsäure und deren Salze umfasst, und/oder mit einer Sulfonsäurefunktion, die aus der Gruppe gewählt sind, die 2-Acrylamido-2-Methylpropansulfonsäure (AMPS), Vinylsulfonsäure, Methallylsulfonsäure und deren Salze umfasst, und/oder nicht-ionische Monomere sind, die aus der Gruppe gewählt sind, die Acrylamid, Methacrylamid, N,N-Dimethylacrylamid, N-Vinylpyrrolidon, N-Vinylacetamid, N-Vinylformamid, Vinylacetat, Acrylatester, Allylalkohol umfasst, und/oder kationische Monomere sind, die aus der Gruppe gewählt sind, die quaternisiertes oder versalztes Dimetyhlaminoethylacrylat (ADAME) und/oder Dimethylaminoethylmethacrylat (MADAME), Dimethyldiallylammoniumchlorid (DADMAC), Acrylamidopropyltrimethylammoniumchlorid (APTAC) und/oder Methacrylamidopropyltrimethylammoniumchlorid (MAPTAC) umfasst.

8. Verfahren nach einem der vorhergehenden Ansprüche, **dadurch gekennzeichnet, dass** die Verzweigung des zweiten Mittels während der Polymerisation erfolgt.

9. Verfahren nach einem der vorhergehenden Ansprüche, **dadurch gekennzeichnet, dass** das Hofmann-Abbauprodukt vor dem Polymer bzw. Copolymer mit einer anionischen Ladungsdichte von über 0,1 meq/g zugesetzt wird.

10. Verfahren nach einem der vorhergehenden Ansprüche, **dadurch gekennzeichnet, dass** das Hofmann-Abbauprodukt sich aus der Hofmann-Abbaureaktion an einem Basenpolymer bzw. Basencopolymer mit einer Konzentration von über 20 Gewichtsprozent ergibt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2004118540 A
- JP 58060094 A
- JP 4057992 A, Mitsui
- EP 377313 A
- JP 57077398 B